# EUROPÄISCHE PATENTSCHRIFT

(11) **EP 3 860 794 B1**
(45) Veröffentlichungstag und Bekanntmachung des Hinweises auf die Patenterteilung: **06.12.2023**
(21) Anmeldenummer: 19784010.1
(22) Anmeldetag: 01.10.2019
(51) Int. Cl.: B23K 35/02, C22F 1/08, B23K 9/12, C21D 9/00

(54) **VERFAHREN ZUR KÄLTEBEHANDLUNG EINES KONTAKTELEMENTS ZUM SCHWEISSEN MIT STROMGEFÜHRTER DRAHTELEKTRODE**
METHOD FOR HEAT TREATMENT OF A CONTACT ELEMENT SUITABLE FOR WELDING USING A CURRENT-CARRYING WIRE ELECTRODE
METHODE DE TRAITEMENT THERMIQUE D'UN ELEMENT DE CONTACT POUR LE SOUDAGE AVEC UN FIL-ELECTRODE

(30) Priorität: 02.10.2018 DE 102018007760
(43) Veröffentlichungstag der Anmeldung: 11.08.2021
(73) Patentinhaber: Messer SE & Co. KGaA, 65812 Bad Soden (DE)
(72) Erfinder: BÖCKLER, Thomas, 52146 Würselen (DE); HILDEBRANDT, Bernd, 47918 Tönisvorst (DE); SELDERS, Georg, 47652 Weeze-Wemb (DE); ROCKSER, Mario, 17498 Hinrichshagen (DE); KAMPFFMEYER, Dirk, 52441 Linnich (DE)
(74) Vertreter: Münzel, Joachim R.
(86) Internationale Anmeldenummer: PCT/EP2019/076620
(87) Internationale Veröffentlichungsnummer: WO 2020/070143

(56) Entgegenhaltungen:
- WO-A2-2011/099711
- DE-A1- 2 517 147
- DE-A1- 19 904 348
- MOEHLER W ET AL: "STROMKONTAKTROHRE MIT VERBESSERTEN EIGENSCHAFTEN - HERGESTELLT AUS STRANGGEPRESSTEN WERKSTOFFVERBUNDEN", THESE DE DOCTORAT PRESENTÉE AU DÉPARTEMENT DE CHIMIE DE L'UNIVERSITÉ DE LAUSANNE POUR L'OBTENTION DU GRADE DE DOCTEUR ÈS SCIENCES, DVS VERLAG, DUSSELDORF, DE, Bd. 53, Nr. 9, 1. September 2001 (2001-09-01), XP001102729, ISSN: 0036-7184

## Beschreibung

Die Erfindung betrifft ein Verfahren zur Behandlung eines Kontaktelements zum Verbessern der Stromkontaktierung beim Lichtbogenschweißen mit stromgeführter Drahtelektrode mittels einer Apparatur zum Lichtbogenschweißen, in der die Drahtelektrode zur Stromaufnahme durch ein an eine Stromquelle angeschlossenes Kontaktelement geführt wird.

Zu den Schweißverfahren mit stromgeführter Drahtelektrode (auch als "stromführende Drahtelektrode" bezeichnet) gehören die meisten klassischen Lichtbogenschweißverfahren, wie das MSG-Schweißen oder das UP-Schweißen. Darüber hinaus werden stromgeführte Drahtelektroden auch beim Laser-Hybrid-Schweißen eingesetzt. Die dabei eingesetzten Drahtelektroden bestehen aus einem Material, das dem Material der zu schweißenden Grundwerkstoffe angepasst ist. Sie können als Massivdrähte aber auch Fülldrähte ausgebildet sein. Im letzteren Falle besteht die Drahtelektrode aus einem Rohr, das mit einem Metallpulver gefüllt ist. Bei der Herstellung der Drähte werden verschieden Ziehprozesse und Wärmebehandlungen eingesetzt, die die Qualität des Drahtzusatzes beeinflussen. Bei allen genannten Verfahren erfolgt die elektrische Verbindung der Drahtelektrode über ein im Schweißbrenner eingebautes Kontaktelement. Das Kontaktelement ist meist aus Kupfer oder einer Kupferlegierung (E-Cu oder CuCrZr) gefertigt und im Einsatz elektrisch mit einer Stromquelle verbunden. Das Kontaktelement ist üblicherweise lösbar mit dem Schweißbrenner verbunden und beispielsweise im Kopf des Brenners eingeschraubt. Kontaktelemente sind der Art und dem Querschnitt der jeweils eingesetzten Elektrode angepasst; Drahtelektroden mit Durchmessern bis 2,5 mm werden in der Regel mit Kontaktdüsen kontaktiert. Für Drahtelektroden mit größerem Durchmesser oder für Bandelektroden kommen geteilte Kontaktrohre oder -platten zum Einsatz. Kontaktdüsen, -rohre und -platten werden im Folgenden unter dem Begriff "Kontaktelement" subsumiert.

Das Kontaktelement ist im Einsatz einem starken Verschleiß ausgesetzt und muss daher - abhängig von der jeweiligen Beanspruchung - von Zeit zu Zeit ausgetauscht werden. Der Verschleiß wird zum einen durch die Strombelastung hervorgerufen, und zum anderen abrasiv durch die Reibung der sich vorschiebenden Drahtelektrode an der Innenoberfläche des Kontaktelements verursacht.

Um der Verschleißanfälligkeit von Kontaktelementen zu begegnen, wird beispielsweise in der DE 199 04 348 A1 und der EP 19 575 981 A1 vorgeschlagen, auf die Oberfläche des Kontaktelements eine Beschichtung aufzutragen, die den mechanischen Verschleiß durch die sich vorschiebende Drahtelektrode reduzieren soll. Dies führt allerdings zu erheblichen Mehrkosten bei der Herstellung des Kontaktelements.

In der Veröffentlichung Möhler, W. et al.: Stromkontaktrohre mit verbesserten Eigenschaften - hergestellt aus stranggepressten Werkstoffverbunden", Fachbeitrag, Schweißen und Schneiden, Bd. 53 (2001), Nr. 9, DVS Verlag, Düsseldorf (XP-001102729) wird ein Herstellungsverfahren von Stromkontaktrohren beschrieben, die durch den Einsatz von Verbundwerkstoffen gegenüber konventionellen Kontaktrohren verbesserte Standzeiten aufweisen. Auch diese neuartigen Stromkontaktrohre sind vergleichsweise aufwändig und kostenintensiv in der Herstellung.

Die WO 2011/099711 A2, welche die Basis für den Oberbegriff des Anspruchs 1 bildet, offenbart ein spezielles Herstellungsverfahren von Schweißkontaktelementen, bei dem typische Herstellungsfehler, wie etwa Abweichungen vom vorgegebenen Innendurchmesser der Elektrodendurchführung oder Risse, Vorsprünge oder anhaftende Fremdkörper in der Elektrodendurchführung vermieden werden. Auch dieses Verfahren ist vergleichsweise aufwändig.

Der Erfindung liegt die Aufgabe zugrunde, den Verschleiß des Kontaktelements zu verringern und damit dessen Lebensdauer zu erhöhen.

Diese Aufgabe wird durch ein Verfahren mit den Merkmalen des Patentanspruchs 1 gelöst. Vorteilhafte Ausgestaltungen sind den Unteransprüchen zu entnehmen.

Erfindungsgemäß durchlaufen die Kontaktelemente nach ihrer Herstellung und vor ihrem bestimmungsgemäßen Einsatz zur Stromkontaktierung einer abschmelzenden Drahtelektrode in einer Schweißapparatur eine Kältebehandlung, während der sie auf eine untere Zieltemperatur von unter minus 50°C, bevorzugt unter minus 100°C, abgekühlt werden. Überraschend hat sich gezeigt, dass Kontaktelementen, die nach dem erfindungsgemäßen Verfahren behandelt wurden, gegenüber dem Einsatz von unbehandelten Kontaktelementen einen wesentlich geringeren abrasiven Verschleiß aufweisen. Das erfindungsgemäße Verfahren ist zur Behandlung aller gängigen Kontaktelemente geeignet, die zur Herstellung eines Stromkontakts mit einer abschmelzenden Drahtelektrode bestimmt sind. Insbesondere eignet sich das erfindungsgemäße Verfahren zur Behandlung von Stromkontaktdüsen, -rohren oder -platten für MSG- oder Unterpulver-Schweißbrenner oder für Laser-Hybrid-Schweißköpfe. Erfindungsgemäß handelt es sich um Kontaktelemente aus Kupfer oder einer Kupferlegierung, wie beispielsweise E-Cu oder CuCrZr mit oder ohne Beschichtung.

Als "Kältebehandlung" soll im Rahmen dieser Erfindung ein Verfahren bezeichnet werden, bei dem ein Werkstück Temperaturen von -50°C und darunter ausgesetzt wird. Die Abkühlung erfolgt dabei in der Regel durch direkten oder indirekten Kontakt mit einem kryogenen Medium, beispielsweise kalter gasförmiger oder verflüssigter Stickstoff. Die Kältebehandlung erfolgt bevorzugt in einem geschlossenen Behälter (Kältekammer), in dem eine entsprechend niedrige Behandlungstemperatur durch direkten oder indirekten Wärmekontakt des Kontaktelements mit einem Kältemittel eingestellt wird. Bevorzugt wird dabei in der Kältekammer, in der das zu behandelnde Werkstück vorliegt, eine entsprechend temperierte Atmosphäre erzeugt, wodurch eine von allen Seiten gleichmäßige Temperierung des Werkstücks erzielt wird und zudem die Temperatur der in der Kältekammer vorliegenden Atmosphäre genau eingestellt werden kann. Beispielsweise erfolgt die Herstellung der temperierten Atmosphäre in der Kältekammer durch Einleiten eines entsprechend temperierten Gases, beispielsweise Stickstoff.

Kältebehandlungen metallischer Werkstücke sind beispielsweise aus der der US 6 537 396 B1, der US 3 819 428 B1, der EP 124 29 29 A1, der DE 25 17 147 A1 und dem Artikel von W. Lausecker, "Wie cool ist das - Die Tieftemperaturbehandlung von Zerspanung-Werkzeugen", Werkzeug-Technik 126,15. Juni 2012, bekannt und beziehen sich insbesondere auf die Umwandlungshärtung von Stahl. Hierbei wird die Härte eines aus Stahl gefertigten Werkstücks dadurch gesteigert, dass das Werkstück im Anschluss an seine Herstellung und einer nachfolgenden Wärmebehandlung auf eine Temperatur zwischen minus 70°C und minus 180°C abgekühlt und auf dieser Temperatur für eine Zeitdauer von beispielsweise 15h gehalten wird.

Aus der US 5 442 929 A ist zudem ein Verfahren zur Kältebehandlung elektrischer Schaltkontakte bekannt. Um einen möglichst widerstandsarmen elektrischen Kontakt herzustellen, bestehen die zueinander korrespondierenden Kontaktflächen einer elektrischen Schaltanordnung häufig aus einem Kupfer und Silber enthaltenden Kompositmaterial. Aufgrund der hohen elektrischen Stromdichten in den während des Schaltvorgangs entstehenden Lichtbögen zwischen den aufeinander zu bewegten Kontakten sowie durch die mechanische Beanspruchung der bei jeder Schalterbetätigung aufeinandertreffenden, stets identischen Kontaktflächen sind diese einem starken Verschleiß unterworfen. Es hat sich gezeigt, dass eine Behandlung, bei der die Kontaktflächen auf eine Temperatur von unter 172 K abgekühlt und mindestens für drei Stunden auf dieser Temperatur gehalten werden, die Lebensdauer derartiger Schaltkontaktflächen verlängern kann. Aufgrund der unterschiedlichen Beanspruchungen ist diese Lehre jedoch nicht ohne weiteres auf Kontaktelemente für abschmelzende Drahtelektroden übertragbar, da diese keinem Schaltvorgang unterworfen sind, sondern einen dauerhaften Stromkontakt bilden, aufgrund des Drahtvorschubs jedoch einem beständigen abrasiven Verschleiß unterliegen.

Die untere Zieltemperatur, also die tiefste Abkühltemperatur, beträgt bevorzugt zwischen minus 50°C und minus 195°C, besonders bevorzugt zwischen minus 100°C und minus 185°C, wobei Werte unter minus 150°C besonders gute Ergebnisse zeigen.

Bei der das Verfahren abschließenden oberen Zieltemperatur handelt es sich um einen Temperaturwert, der geeignet ist, die Kondensation von Wasser aus einer insbesondere bei Normalbedingungen (20°C) vorliegenden Umgebungsatmosphäre zu verhindern, um Korrosionen an der Drahtoberfläche zu vermeiden. Bis zum Erreichen der oberen Zieltemperatur erfolgt die Durchführung des erfindungsgemäßen Verfahrens daher bevorzugt in eine inerten Atmosphäre mit geringem Wasseranteil, beispielsweise in einer Atmosphäre, die überwiegend aus gasförmigem Stickstoff und/oder einem Edelgas besteht. Beispielsweise beträgt die obere Zieltemperatur zwischen 20°C und 40°C.

Eine besonders vorteilhafte Ausgestaltung der Erfindung sieht vor, dass das Kontaktelement im Anschluss an die Abkühlphase und vor der Aufwärmphase eine Haltephase durchläuft, in der das Kontaktelement für eine Dauer von mindestens 30s auf der unteren Zieltemperatur gehalten wird. Bereits bei Haltezeiten zwischen 30s und 10 min ergibt sich eine deutliche Verbesserung der Verschleißbeständigkeit des Kontaktelements. Eine Haltezeit, die 90 min übersteigt, ist erfindungsgemäß nicht erforderlich, wenngleich nicht ausgeschlossen. Bevorzugt beträgt die Dauer der Haltephase zwischen 10 min und 60 min.

Die Abkühlung und Aufwärmung des Kontaktelements in der Kältebehandlung erfolgt bevorzugt langsam, um sicherzustellen, dass es zu keinem Temperaturschock kommt und eine vollständige und gleichmäßige Durchkühlung des Werkstücks erzielt wird. Demzufolge erweist es sich als vorteilhaft, wenn die Abkühlung des Kontaktelements in der Abkühlphase und/oder das Aufwärmen des Kontaktelements in der Aufwärmphase nicht rascher als mit einer Temperaturänderung (Geschwindigkeit) ΔT/Δt von ΔT/Δt ≤ 10 K/min erfolgt, bevorzugt beträgt ΔT/Δt zwischen 1 K/min und 10 K/min, besonders bevorzugt zwischen 1,5 K/min und 5 K/min (Unterbrechungszeiten beim Abkühl- bzw. Aufwärmvorgang jeweils nicht eingerechnet).

Um eine gleichmäßige Abkühlung bzw. Aufwärmung zu gewährleisten, ist es darüber hinaus vorteilhaft, den Abkühlvorgang in der Abkühlphase und/oder den Aufwärmvorgang der Aufwärmphase die Abkühlung bzw. Aufwärmung des Kontaktelements mehrfach zu unterbrechen und das Kontaktelement für eine vorgegebene Zeitdauer auf einer vorgegebenen Zwischentemperatur zu halten (Zwischenhaltephase). Beispielsweise kann in Abständen von 5K bis 50K jeweils eine Unterbrechung eingefügt werden, während der das Werkstück im wesentlichen auf der erreichten Temperatur gehalten wird. Im Anschluss an die Zwischenhaltephase wird der Abkühlvorgang bzw. der Aufwärmvorgang wie zuvor fortgeführt. Während der Unterbrechungen können im Kristallverband des Werkstückmaterials noch mit einer vergleichsweise hohen Diffusionsgeschwindigkeit Umlagerungsprozesse stattfinden, die die Homogenität des Werkstoffes und damit Ausprägung positiver Werkstoffeigenschaften begünstigen können. Die Dauer einer Zwischenhaltephase in der Abkühlphase und/oder der Aufwärmphase liegt erfindungsgemäß bevorzugt bei jeweils mindestens 30s, bevorzugt jeweils zwischen 1 min und 120 min.

Eine besonders vorteilhafte Ausgestaltung der Erfindung sieht vor, das Kontaktelement während der Abkühlphase und/oder Haltephase und/oder einer Zwischenhaltephase ein- oder mehrmals zu erwärmen und anschließend wieder auf die untere Zieltemperatur oder eine andere Temperatur abzukühlen. Eine solche zwischenzeitliche Aufwärmphase kann anstelle oder ergänzend zur einer Zwischenhaltephase erfolgen. Durch die zwischenzeitlichen Aufwärmphasen werden im behandelten Material Spannungen abgebaut, die aufgrund der Temperaturänderungen im Verlauf der Kältebehandlung im Material auftreten können. Zusammen mit einer dem jeweiligen Werkstück angepassten Abkühlgeschwindigkeit verhindern zwischenzeitliche Aufwärmphasen so eine Qualitätsminderung des Stromkontakts. Beispielsweise erfolgt in der Abkühlphase und/oder der Haltephase eine ein- oder mehrmalige Erwärmung, wobei die Anfangstemperatur (also die Temperatur vor Beginn der Kältebehandlung) nicht überschritten wird. Abhängig von der Ausgangstemperatur erfolgt dabei jeweils eine Erwärmung um mindestens 10K, bevorzugt mindestens 50K, beispielsweise auf einen Temperaturwert von jeweils zwischen -140°C und -160°C. Im Anschluss an diese zwischenzeitliche Aufwärmphase erfolgt eine erneute Abkühlung, der sich eine weitere zwischenzeitliche Aufwärmphase und/oder eine Abkühlung auf die untere Zieltemperatur, beispielsweise zwischen minus 150°C und minus 195°C, anschließt.. Die Temperierung, d.h. das Abkühlen oder das Aufwärmen des Kontaktelements während der Kältebehandlung erfolgt zweckmäßigerweise durch Erzeugen einer entsprechend temperierten Atmosphäre in einer das Kontaktelement enthaltenden Kältekammer. Zur Erzeugung der temperierten Atmosphäre in der Kältekammer wird beispielsweise außerhalb der Kältekammer ein inertes Gas, beispielsweise Stickstoff oder ein Edelgas, auf eine entsprechende Temperatur gebracht und anschließend der Kältekammer zugeführt.

Elektrische Kontaktelemente, die nach dem erfindungsgemäßen Verfahren behandelt wurden, sind zum Einbau in allen mit stromführender, abschmelzender Drahtelektrode ausgestatteten Schweißapparaturen geeignet.

Insbesondere bei aus Kupfer oder einer Kupferlegierung gefertigten Kontaktelementen zeigen die erfindungsgemäßen Kontaktelemente eine erheblich geringere Verschleißanfälligkeit und im Einsatz einen geringeren elektrischen Widerstand als unbehandelte Kontaktelemente. Eine besondere Beschichtung ist hierfür nicht erforderlich.

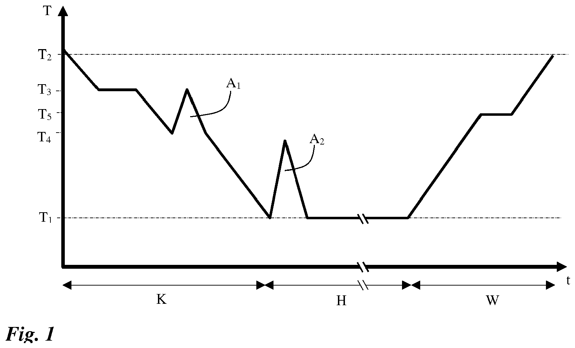

Anhand der Zeichnung soll ein Ausführungsbeispiel der Erfindung näher erläutert werden. Die Zeichnung zeigt in einem Temperatur (T) - Zeit (t) - Diagramm schematisch den Verlauf der Temperatur eines Kontaktelements während der Behandlung nach einem erfindungsgemäßen Verfahren.

Ein bei Umgebungstemperatur vorliegendes Kontaktelement aus Kupfer oder einer Kupferlegierung, das zum Einbau in einen Schweißbrenner, beispielsweise einem Schweißbrenner zum UP- oder MSG-Schweißen geeignet ist, wird einer Kältekammer zugeführt und diese anschließend verschlossen. Durch sukzessive Zuführung eines Kältemittels, beispielsweise kalter gasförmiger Stickstoff mit einer Temperatur von minus 190°C, wird die Temperatur der Atmosphäre im Innern der Kältekammer langsam, beispielsweise mit einer Geschwindigkeit ΔT/Δt zwischen 1K/min und 10 K/min, abgesenkt. Dadurch sinkt die Temperatur des Kontaktelements während einer Abkühlphase K auf eine untere Zieltemperatur T₁ von beispielsweise minus 150°C. Im Anschluss an die Abkühlphase K wird das Kontaktelement für einen Zeitraum von beispielweise 1 min bis 100 min auf der unteren Zieltemperatur T₁ gehalten (Haltephase H). Im Anschluss an die Haltephase H wird das Kontaktelement durch Zufuhr eines Gases (beispielsweise Stickstoff), dessen Temperatur höher als die Temperatur im Innern der Kältekammer ist, allmählich, d.h. mit einer Aufwärmgeschwindigkeit, die der Abkühlgeschwindigkeit in der Abkühlphase K vergleichbar ist, auf eine obere Zieltemperatur T₂, erwärmt (Aufwärmphase W). T₂ entspricht beispielsweise der Umgebungstemperatur.

Um aufgrund der Kältebehandlung auftretende Spannungen im behandelten Material abzubauen, ist es vorteilhaft, die Temperatur des Werkstücks in der Kältekammer während der Abkühlphase K und/oder der Haltephase H vorübergehend zu erhöhen. In diesen zwischenzeitlichen Aufwärmphasen A₁, A₂ erfolgt eine Temperaturerhöhung um beispielsweise 10K bis 50K auf eine Wert unterhalb der Anfangstemperatur. Im hier gezeigten Ausführungsbeispiel erfolgt eine erste zwischenzeitliche Aufwärmphase A₁, nachdem die Temperatur der Drahtelektrode einen Wert von T₄ erreicht hat, und eine zweite Aufwärmphase A₂, nachdem die untere Zieltemperatur T₁ erreicht wurde. Im Anschluss an die Aufwärmphase A₂ kann sich eine weitere zwischenzeitliche Aufwärmphase anschließen, oder das Werkstück verbleibt für eine gewisse Zeitdauer auf der unteren Zieltemperatur T₁.

Während der Abkühlphase K kann die Zufuhr des Kältemittels ein- oder mehrmals gestoppt und dadurch die Abkühlung des Kontaktelements verlangsamt oder auf einer vorgegebenen Temperatur gehalten werden. Ebenso kann in der Aufwärmphase W die Zufuhr von warmem Gas ein- oder mehrmals unterbrochen und so die Aufwärmgeschwindigkeit verlangsamt oder das Kontaktelement auf einer vorgegebene Temperatur gehalten werden. In diesen Zwischenhaltephasen gilt also ΔT/Δt << 1 K/min. In dem in der Zeichnung gezeigten Ausführungsbeispiel werden Zwischenhaltephasen während der Abkühlphase K bei einer Temperaturen T₃, mit T₁ < T₄ < T₃ < T₂ und während der Aufwärmphase W bei einer Temperatur T₅ mit T₁<T₅<T₂ eingelegt. Nach der Kältebehandlung wird das Kontaktelement aus der Kältekammer entnommen und in einen Schweißapparat eingebaut.

## Patentansprüche

1. Verfahren zur Behandlung eines Kontaktelements zum Verbessern der Stromkontaktierung beim Lichtbogenschweißen mit stromgeführter Drahtelektrode mittels einer Apparatur zum Lichtbogenschweißen, in der die Drahtelektrode zur Stromaufnahme durch ein an eine Stromquelle angeschlossenes Kontaktelement geführt wird,
**dadurch gekennzeichnet,**
**dass** ein bei Umgebungstemperatur vorliegendes Kontaktelement aus Kupfer oder einer Kupferlegierung, das zum Einbau in einen Schweißbrenner geeignet ist, einer Kältekammer zugeführt wird und diese anschließend verschlossen wird,
**dass** das Kontaktelement vor seinem bestimmungsgemäßen Einsatz einer Kältebehandlung unterzogen wird, in der das Kontaktelement in einer Abkühlphase auf eine untere Zieltemperatur von unter minus 50°C abgekühlt und anschließend in einer Aufwärmphase auf eine obere Zieltemperatur zwischen 20°C und 40°C erwärmt wird,
und **dass** nach der Kältebehandlung das Kontaktelement aus der Kältekammer entnommen und in einen Schweißapparat eingebaut wird.

2. Verfahren nach Anspruch 1, **dadurch gekennzeichnet, dass** die untere Zieltemperatur zwischen minus 50°C und minus 195°C, bevorzugt zwischen minus 100°C und minus 185°C beträgt.

3. Verfahren nach einem der vorhergehenden Ansprüche, **dadurch gekennzeichnet, dass** das Kontaktelement nach der Abkühlphase und vor der Aufwärmphase eine Haltephase durchläuft, in der das Kontaktelement für eine Dauer von mindestens 30s auf der unteren Zieltemperatur gehalten wird.

4. Verfahren nach einem der vorhergehenden Ansprüche, **dadurch gekennzeichnet, dass** die Abkühlung des Kontaktelements in der Abkühlphase und/oder das Aufwärmen des Kontaktelements in der Aufwärmphase mit einer Geschwindigkeit zwischen 1,5 K/min und 10 K/min erfolgt.

5. Verfahren nach einem der vorhergehenden Ansprüche, **dadurch gekennzeichnet, dass** die Abkühlphase und/oder die Aufwärmphase für eine vorgegebene Zeitdauer unterbrochen wird, während der das Kontaktelement auf einer erreichten Temperatur im wesentlichen gehalten wird.

6. Verfahren nach einem der vorhergehenden Ansprüche, **dadurch gekennzeichnet, dass** das Kontaktelement während der Abkühlphase und/oder der Haltephase ein- oder mehrmals erwärmt und anschließend wieder abgekühlt wird.

7. Verfahren nach Anspruch 6, **dadurch gekennzeichnet, dass** die Temperatur, auf die das Kontaktelement während der Abkühlphase und/oder der Aufwärmphase erwärmt wird, jeweils zwischen -140°C und -186°C beträgt.

8. Verfahren nach einem der vorhergehenden Ansprüche, **dadurch gekennzeichnet, dass** die Temperierung des Kontaktelements während der Kältebehandlung durch Erzeugen einer entsprechend temperierten Atmosphäre in der das Kontaktelement enthaltenden Kältekammer erfolgt.

## Claims

1. Method for treating a contact element to improve current contacting when arc welding using a current-carrying wire electrode by means of an apparatus for arc welding in which, to pick up current, the wire electrode is passed through a contact element connected to a power source, **characterized**
**in that** a contact element composed of copper or a copper alloy that is at ambient temperature and that is suitable for fitting in a welding torch is fed to a cold chamber and the latter is subsequently closed,
**in that**, before its intended use, the contact element is subjected to a cold treatment, in which the contact element is cooled down to a lower target temperature of below minus 50°C in a cooling phase and is subsequently heated up to an upper target temperature of between 20°C and 40°C in a heating phase,
and **in that**, after the cold treatment, the contact element is removed from the cold chamber and fitted into a welding apparatus.

2. Method according to Claim 1, **characterized in that** the lower target temperature is between minus 50°C and minus 195°C, preferably between minus 100°C and minus 185°C.

3. Method according to either of the preceding claims, **characterized in that**, after the cooling phase and before the heating phase, the contact element passes through a holding phase, in which the contact element is kept at the lower target temperature for a duration of at least 30 s.

4. Method according to one of the preceding claims, **characterized in that** the cooling of the contact element in the cooling phase and/or the heating of the contact element in the heating phase take place at a rate of between 1.5 K/min and 10 K/min.

5. Method according to one of the preceding claims, **characterized in that** the cooling phase and/or the heating phase is interrupted for a prescribed time period during which the contact element is kept substantially at a temperature reached.

6. Method according to one of the preceding claims, **characterized in that** the contact element is heated and subsequently cooled down again one or more times during the cooling phase and/or the holding phase.

7. Method according to Claim 6, **characterized in that** the temperature to which the contact element is heated during the cooling phase and/or the heating phase is in each case between -140°C and -186°C.

8. Method according to one of the preceding claims, **characterized in that** the temperature adjustment of the contact element during the cold treatment takes place by producing a correspondingly temperature-adjusted atmosphere in the cold chamber containing the contact element.

## Revendications

1. Procédé de traitement d'un élément de contact afin d'améliorer le contact de courant, lors du soudage à l'arc, avec un fil-électrode alimenté en courant au moyen d'un appareil de soudage à l'arc dans lequel le fil-électrode est guidé à travers un élément de contact raccordé à une source de courant afin de recevoir le courant,
**caractérisé en ce que**
un élément de contact en cuivre ou en alliage de cuivre, présent à la température ambiante et approprié pour être installé dans une torche de soudage, est amené à une chambre froide et celle-ci est ensuite fermée,
l'élément de contact est soumis avant son utilisation prévue à un traitement à froid dans lequel l'élément de contact est refroidi dans une phase de refroidissement jusqu'à une température cible inférieure à moins 50 °C, puis est chauffé dans une phase de réchauffement jusqu'à une température cible plus élevée comprise entre 20 °C et 40 °C,
et, après le traitement à froid, l'élément de contact est retiré de la chambre froide et placé dans un appareil de soudage.

2. Procédé selon la revendication 1, **caractérisé en ce que** la température cible inférieure est comprise entre moins 50 °C et moins 195 °C, de préférence entre moins 100 °C et moins 185 °C.

3. Procédé selon l'une des revendications précédentes, **caractérisé en ce que**, après la phase de refroidissement et avant la phase de réchauffement, l'élément de contact passe par une phase de maintien dans laquelle l'élément de contact est maintenu à la température cible inférieure pendant une période d'au moins 30 s.

4. Procédé selon l'une des revendications précédentes, **caractérisé en ce que** le refroidissement de l'élément de contact dans la phase de refroidissement et/ou le réchauffement de l'élément de contact dans la phase de réchauffement est effectuée à une vitesse comprise entre 1,5 K/min et 10 K/min.

5. Procédé selon l'une des revendications précédentes, **caractérisé en ce que** la phase de refroidissement et/ou la phase de réchauffement est interrompue pendant une durée spécifiée, pendant laquelle l'élément de contact est sensiblement maintenu à une température atteinte.

6. Procédé selon l'une des revendications précédentes, **caractérisé en ce que** l'élément de contact est chauffé puis est à nouveau refroidi une ou plusieurs fois pendant la phase de refroidissement et/ou la phase de maintien.

7. Procédé selon la revendication 6, **caractérisé en ce que** la température, jusqu'à laquelle l'élément de contact est chauffé pendant la phase de refroidissement et/ou la phase de réchauffement, est comprise entre 140 °C et -186 °C.

8. Procédé selon l'une des revendications précédentes, **caractérisé en ce que** la régulation de température de l'élément de contact est effectuée pendant le traitement à froid par génération d'une atmosphère régulée en température de manière appropriée dans la chambre froide contenant l'élément de contact.
